# EUROPEAN PATENT SPECIFICATION

(11) **EP 2 114 093 B1**
(45) Date of publication and mention of the grant of the patent: **29.06.2011**
(21) Application number: 08008182.1
(22) Date of filing: 29.04.2008
(51) Int. Cl.: H04W 24/02, H04W 88/08

(54) **Method and controller for maintaining network stability in a cellular telecommunications system and apparatus thereof**
Verfahren und Steuerung zur Aufrechterhaltung der Netzwerkstabilität in einem zellulären Telekommunikationssystem und Vorrichtung dafür
Procédé et contrôleur pour conserver la stabilité du réseau dans un système de télécommunications cellulaire et appareil correspondant

(43) Date of publication of application: 04.11.2009
(73) Proprietor: Nokia Siemens Networks Oy, 02610 Espoo (FI)
(72) Inventor: Hämäläinen, Seppo, 02610 Espoo (FI); Tang, Haitao, 02150 Espoo (FI)
(74) Representative: Bruglachner, Thomas E.

(56) References cited:
- WO-A-98/26614
- WO-A-98/57516
- GB-A- 2 446 438

## Description

### Field of the invention

The invention is used in cellular telecommunications systems to ensure that network stability is maintained at all times thus avoiding a reduction of efficiency and degradation of services provided in said cellular telecommunications systems.

### Summary of the invention

In today's cellular telecommunications systems, an important factor that is taken into account when designing network layouts, for example in SON (self-organised networks), is that of reducing interference between cells. Interference can cause severe degradation on transmitted signals within the network. Especially in cellular telecommunications systems, such interference can affect transmissions between user equipment (UE) and access nodes (ANs).

In such cases, a re-transmission of messages is required increasing the amount of radio resources needed for each connection. Furthermore, more control messages need to be transmitted between UEs and ANs, increasing the processing time of setting up a connection. This leads to a reduction of the overall efficiency of the system.

Moreover, the need for retransmissions requires that more power be provided for the transmission of messages than would be necessary if no interference was present. This causes an increase in the amount of power wasted within the system. As today's telecommunication systems are dynamic and network parameters change as well as operational states change in real time, it is necessary to have sufficient power available throughout the system. Power wastage also reduces the overall efficiency of such systems.

Lack of sufficient power as well as interference will cause network instability to be present within cellular telecommunication systems. Network instability will further reduce the efficiency of such systems and reduce the number of services that can be provided to users. In instances where real-time services are being provided to UEs such instability can be very detrimental to the quality of service being provided.

One way in which interference and power wastage can be reduced is to power down ANs, i.e. to switch off cells, within the system. However, such an action will cause any active UEs within a cell that is being switched off to be handed over to neighbouring cells, i.e. to neighbouring ANs, so that active sessions remain active and are not terminated. Furthermore, any idle UEs within a cell that is being switched off are also forced to re-select a neighbouring cell.

However, every time a cell/cells is/are switched off network instability is caused within the system. Active and idle sessions have to be handed over to new cells as radio coverage is lost or barred, neighbourhood relationships that have been built up and maintained in each AN have to be updated. This will cause network instability. An increase in control signalling, session signalling, neighbourhood relationship update processing will increase the amount of processing power required and reduce the amount of free bandwidth resources available. Similarly, switching on of a cell or cells will cause network instability, as more power is needed, control and session signalling takes place and neighbourhood relationships again need to be updated.

Network instability will reduce the efficiency of cellular telecommunication systems and reduce the number of services that can be provided to users. In instances where real-time services are being provided to UEs such instability can be very detrimental to the quality of service being provided.

WO 98/26614 relates to a technique for enabling a base station transceiver to switch to an energy saving mode depending on the traffic load present and thus reduce its power consumption.

WO 98/57516 relates to a for enabling a base station to deactivate excess transceiver units when the traffic capacity need has been reduced in the radio coverage area of the base station and thus reduce energy and radio resources wastage.

A need therefore exists for a technique that can maintain network stability and radio coverage in cellular systems in the face of dynamically changing network parameters.

With the present invention, the above mentioned issues are resolved. The technique is achieved by the teachings contained in the independent method claim 1.

Further advantageous embodiments can be seen in the dependent claims.

### Short description of the drawings

The present invention will become more fully understood from the description given herein below and the accompanying drawings which are given by way of illustration only and thus are not limitative of the present invention, and wherein:
Fig. 1 depicts a cellular telecommunications system 1000 wherein the inventive technique is applicable.
Fig. 2 depicts a flow chart showing the steps of the inventive technique.

### Detailed description of the invention

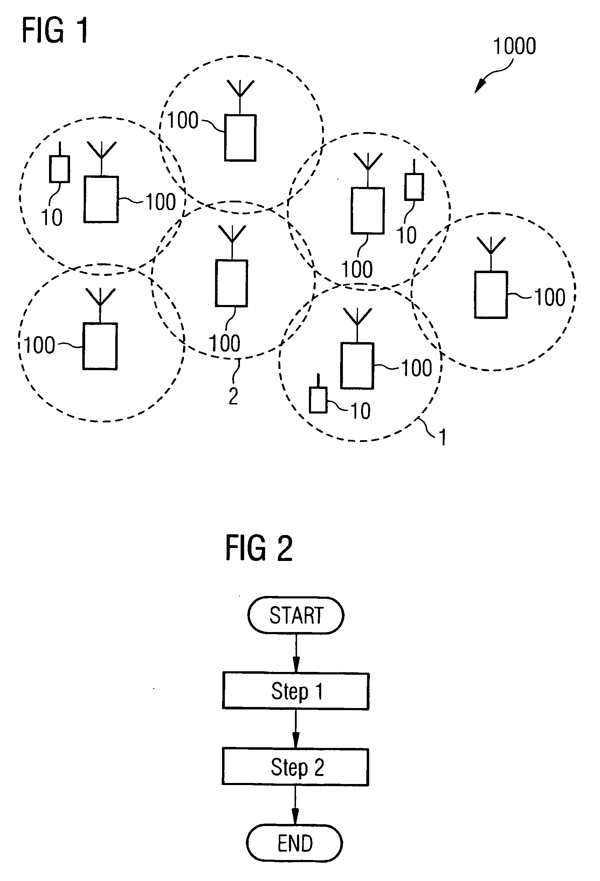

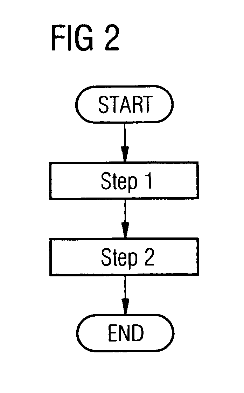

Fig. 1 depicts a cellular telecommunications system 1000 wherein the inventive technique is applicable. Cellular telecommunications system 1000 comprises of ANs 100 that provide radio coverage throughout the system 1000 and allow UEs 10 present in said system 1000, to connect to the internet and/or the PSTN (Public Switched Telephone Network).

AN 100 is a controller that can be a local controller controlling a specific area or areas of radio coverage (also known as cells) which have a certain overlap or it can be a network controller controlling the network within system 1000. A local controller can be at least one of the following: a base station (BS), a radio network controller (RNC), a base station controller (BSC), a nodeB, an enodeB. A UE 10 can be at least one of the following: a mobile telephone, a personal computer, a laptop computer, an electronic device having means for radio transmission and reception. For ease of understanding connections to core network i.e. internet and/or PSTN are not shown, however a skilled person in the art would be aware of the existence of these connections.

In system 1000, a particular cell 1 is switched off, i.e. AN 100 controlling said cell is powered down. The switching off can be done locally by AN 100 taking the decision, for example due to a number of active and/or idle sessions with UEs 10 being below a threshold or because interference present is above a threshold or by a network controller (not shown).

Upon powering down AN 100 of cell 1, AN 100 will notify AN 100 of cell 2, which neighbours cell 1, that UE 10 located within cell 1 is to be handed over to cell 2, as radio coverage has to be maintained. This handover of control and communication channels is transparent to any UEs 10 that are present in cell 1.

AN 100 which is the controller of cell 1 also instructs a controller AN 100 of a neighbouring cell 2 to take over the radio coverage of first cell 1. The controller instructs the neighbouring cell controller by transmitting a message instructing the neighbouring cell controller to take over the radio coverage of the first cell 1. The controller of the neighbouring cell 2 also takes over a cell configuration of cell 1 controlled by a controller AN 100 of the first cell 1. The cell configuration comprises at least a physical cell identifier (CID) and a global cell identifier (GID) of the cell 1 controlled by a controller of the first cell 1. The cell configuration is transmitted in the same message instructing the neighbouring cell controller to take over the radio coverage of the first cell 1. By taking over the configuration of the cell that is switched off, UEs 10 present in the cell are not made aware of the switching off of the cell. From the point of view of a UE 10 there has been no change in the network configuration. In this way, a UE 10 does not have to perform a re-configuration or a forced handover to another AN 100. In this way, control messaging between a UE 10 and AN 100 is kept low, allowing bandwidth resources to be made available to other services and UEs 10 that require them.

In addition, once the neighbouring cell 2 controller receives the cell configuration of cell 1, it adds the cell configuration of cell 1 to a cell configuration list that is has. It will also transmit the cell configuration list it has over a broadcast channel (BCH), in order to notify neighbouring controllers of its updated configuration list.
Furthermore, upon re-activation of the first cell 1 controller, by command of a central network controller, and consequent transmittal of a message informing the neighbouring cell 2 controller of the re-activation, neighbouring cell 2 controller releases the cell 1 configuration back to the first cell 1 controller. Once it has released the cell 1 configuration, the neighbouring cell 2 controller removes the cell 1 configuration from its cell configuration list.

Fig. 2 depicts in a flow chart form the steps of the inventive technique. In step 1, a controller de-activates a first cell 1. In step 2, the controller also instructs a controller of a neighbouring cell 2 to take over the radio coverage of first cell 1. The controller instructs the neighbouring cell controller by transmitting a message instructing the neighbouring cell controller to take over the radio coverage of the first cell 1.

In a further refinement of the inventive technique, the controller of the neighbouring cell 2 also takes over a cell configuration of cell 1 controlled by a controller of the first cell 1. The cell configuration comprises at least a physical cell identifier (CID) and a global cell identifier (GID) of the cell 1 controlled by a controller of the first cell 1. The cell configuration is transmitted in the same message instructing the neighbouring cell controller to take over the radio coverage of the first cell 1. In this way, as the message comprises both the instruction to take over the radio coverage and the cell configuration, the number of message transmissions is reduced, saving bandwidth as well as allowing the AN 100 being powered down to do so quickly.

In a further refinement of the inventive technique, once the neighbouring cell 2 controller receives the cell configuration of cell 1, it adds the cell configuration of cell 1 to a cell configuration list. This cell configuration list is stored in storage means arranged to store information and can be a database or a memory device. The cell configuration list also comprises at least of the neighbouring cell's own configuration. It can also comprise any neighbour relationships that have been built up.

In a further refinement of the inventive technique, the neighbouring cell controller transmits the cell configuration list over a broadcast channel (BCH), in order to notify neighbouring controllers of its updated configuration list. In this way, even though cell 1 is physically switched off, neighbouring cells are aware that a cell with a particular configuration is still active within the system 1000 and UEs 10 and messages can still be transmitted and received from this cell.

In a further refinement of the inventive technique, upon re-activation of the first cell 1 controller and consequent transmittal of a message informing the neighbouring cell 2 controller of the re-activation, the neighbouring cell 2 controller releases the cell 1 configuration back to the first cell 1 controller. Upon re-activation of the first cell 1 controller, the first cell 1 controller can also in a further refinement of the inventive technique also transmit via a BCH its configuration list.

In a further refinement of the inventive technique, upon the release of the cell 1 configuration, the neighbouring cell 2 controller removes the cell 1 configuration from its cell configuration list. In a further refinement of the inventive technique neighbouring cell 2 controller can then transmit via a BCH its new updated configuration list.

The inventive technique can be implemented in a controller device having means arranged to execute the steps of the inventive technique. The controller can be a local controller controlling a specific area or areas of radio coverage (also known as cells) or it can be a network controller controlling the network within system 1000. A local controller can be at least one of the following: a base station (BS), a radio network controller (RNC), a base station controller (BSC), a nodeB, an enodeB. The means can be processing, receiving, transmitting, calculating means used in cellular telecommunications systems and are known by persons skilled in the art.

Although the invention has been described in terms of preferred embodiments and refinements described herein, those skilled in the art will appreciate other embodiments and modifications which can be made without departing from the scope of the teachings of the invention. All such modifications are intended to be included within the scope of the claims appended hereto.

## Claims

1. Method for maintaining radio coverage in a cellular telecommunications system (1000) comprising the steps of:
- de-activating a first cell (1) in said cellular telecommunications system (1000) by a controller;
- said controller instructing a neighbouring cell (2) controller to take over the radio coverage of said first cell (1), **characterised in that**,
- said neighbouring cell controller also taking over a cell configuration of the cell controlled by said first cell controller, and
- said neighbouring cell controller transmitting said cell configuration list over a broadcast channel.

2. Method according to claim 1, wherein said cell configuration comprises at least a physical cell identifier and a global cell identifier of said cell controlled by said first cell controller.

3. Method according to any previous claim, wherein said neighbouring cell controller adds said cell configuration to a cell configuration list.

4. Method according to claim 3, wherein said cell configuration list comprises at least of said neighbouring cell's own cell configuration.

5. Method according to any previous claim, wherein upon re-activation of said first cell controller and consequent transmittal of a message informing said neighbouring cell controller of said re-activation, said neighbouring cell controller releases said cell configuration back to said first cell controller.

6. Method according to claim 5, wherein upon said release, said neighbouring cell controller removes said cell configuration from said cell configuration list.

7. Controller for maintaining radio coverage in a cellular telecommunications system (1000) having means arranged to execute the method steps of claims 1 to 6.

8. Controller according to claim 7, wherein said controller is at least one of the following: a local controller, a network controller.

9. Controller according to claim 8, wherein said local controller is at least one of the following: a base station, a nodeB, an enodeB, a radio network controller, a base station controller.

## Patentansprüche

1. Verfahren zur Aufrechterhaltung von Funkversorgung in einem zellularen Telekommunikationssystem (1000) mit folgenden Schritten:
- Deaktivieren einer ersten Zelle (1) in dem zellularen Telekommunikationssystem (1000) durch eine Steuerung;
- Anweisen durch die Steuerung der Steuerung einer Nachbarzelle (2) zum Übernehmen der Funkversorgung der ersten Zelle (1), **dadurch gekennzeichnet, dass**
- die Nachbarzellensteuerung auch einen Zellenaufbau der durch die erste Zellensteuerung gesteuerten Zelle übernimmt, und
- die Nachbarzellensteuerung die Zellenaufbauliste über einen Rundsendekanal überträgt.

2. Verfahren nach Anspruch 1, wobei der Zellenaufbau mindestens eine physikalische Zellenkennung und eine globale Zellenkennung der durch die erste Zellensteuerung gesteuerten Zelle umfasst.

3. Verfahren nach einem beliebigen vorhergehenden Anspruch, wobei die Nachbarzellensteuerung den Zellenaufbau einer Zellenaufbauliste hinzufügt.

4. Verfahren nach Anspruch 3, wobei die Zellenaufbauliste mindestens den eigenen Zellenaufbau der Nachbarzelle umfasst.

5. Verfahren nach einem beliebigen vorhergehenden Anspruch, wobei bei Wiederaktivierung der Steuerung der ersten Zelle und nachfolgender Übertragung einer die Nachbarzellensteuerung über die Wiederaktivierung informierenden Nachricht die Nachbarzellensteuerung den Zellenaufbau zur Steuerung der ersten Zelle zurück freigibt.

6. Verfahren nach Anspruch 5, wobei bei der Freigabe die Nachbarzellensteuerung den Zellenaufbau aus der Zellenaufbauliste entfernt.

7. Steuerung zur Aufrechterhaltung von Funkversorgung in einem zellularen Telekommunikationssystem (1000) mit Mitteln zur Ausführung der Verfahrensschritte der Ansprüche 1 bis 6.

8. Steuerung nach Anspruch 7, wobei die Steuerung mindestens eine der folgenden ist: eine lokale Steuerung, eine Netzsteuerung.

9. Steuerung nach Anspruch 8, wobei die lokale Steuerung mindestens eine der Folgenden ist: eine Basisstation, eine Node-B-Station, eine eNode-B-Station, eine Funknetzsteuerung eine Basisstationssteuerung.

## Revendications

1. Un procédé de maintien d'une couverture radio dans un système de télécommunications cellulaire (1000) comprenant les étapes suivantes :
- la désactivation d'une première cellule (1) dans ledit système de télécommunications cellulaire (1000) par un dispositif de commande,
- ledit dispositif de commande donnant l'ordre à un dispositif de commande de cellule voisine (2) de prendre en charge la couverture radio de ladite première cellule (1), **caractérise en ce que**
- ledit dispositif de commande de cellule voisine prend également en charge une configuration de cellule de la cellule commandée par ledit dispositif de commande de première cellule, et
- ledit dispositif de commande de cellule voisine transmet ladite liste de configuration de cellule à un canal de radiodiffusion.

2. Procédé selon la revendication 1, dans lequel ladite configuration de cellule comprend au moins un identifiant de cellule physique et un identifiant de cellule global de ladite cellule commandée par ledit dispositif de commande de première cellule.

3. Procédé selon l'une quelconque des revendications précédentes, dans lequel ledit dispositif de commande de cellule voisine ajoute ladite configuration de cellule à une liste de configuration de cellule.

4. Procédé selon la revendication 3, dans lequel ladite liste de configuration de cellule comprend au moins la propre configuration de cellule de ladite cellule voisine.

5. Procédé selon l'une quelconque des revendications précédentes, dans lequel, après réactivation dudit dispositif de commande de première cellule et transmission consécutive d'un message informant ledit dispositif de commande de cellule voisine de ladite réactivation, ledit dispositif de commande de cellule voisine restitue ladite configuration de cellule maudit dispositif de commande de première cellule.

6. Procédé selon la revendication 5, dans lequel, après ladite restitution, ledit dispositif de commande de cellule voisine supprime ladite configuration de cellule de ladite liste de configuration de cellule.

7. Un dispositif de commande de maintien d'une couverture radio dans un système de télécommunications cellulaire (1000) possédant un moyen agencé de façon à exécuter les opérations de procédé des revendications 1 à 6.

8. Dispositif de commande selon la revendication 7, dans lequel ledit dispositif de commande est au moins l'un des dispositifs suivants : un dispositif de commande local, un dispositif de commande de réseau.

9. Dispositif de commande selon la revendication 8, dans lequel ledit dispositif de commande local est au moins l'un des dispositifs suivants : une station de base, un noeud B, un noeud B évolué, un dispositif de commande de réseau radio, un dispositif de commande de station de base.
